# EUROPÄISCHE PATENTANMELDUNG

(11) **EP 1 604 927 A1**
(43) Veröffentlichungstag der Anmeldung: **14.12.2005**
(21) Anmeldenummer: 05104710.8
(22) Anmeldetag: 01.06.2005
(51) Int. Cl.: B65H 19/18, C09J 7/02, B65H 19/10

(54) **Klebeband und seine Verwendung**

(30) Priorität: 11.06.2004 DE 102004028312
(71) Anmelder: tesa AG, 20253 Hamburg (DE)
(72) Erfinder: Wienberg, Uwe, 25436, Uetersen (DE)
(74) Vertreter: Stubbe, Andreas

(57) **Zusammenfassung**

Klebeband (1) für den fliegenden Rollenwechsel insb. in Papierveredelungsmaschinen, mit einem Papierträger (2), der einseitig mit einer Selbstklebemasse (3) beschichtet ist, wobei ein Teil der nichtklebenden Rückseite des Papierträgers (2) mit einem beidseitig klebenden Klebeband (6) ausgerüstet ist, welches einen spleissfreudigen Papierträger (7) aufweist, der beidseits mit einer Selbstklebemasse (8, 9) ausgerüstet ist, und welches in einem Abstand (V) von 0,5-15 mm von einer der beiden Längskanten des Klebebandes (1) angeordnet ist, und wobei auch der andere Randbereich der Rückseite des Papierträgers (2) mit einem schmalen Streifen eines beidseitig klebenden Klebebandes (14) ausgerüstet ist, welches einen spleissfreudigen Papierträger (15) aufweist, der beidseits mit einer Selbstklebemasse (16, 17) ausgerüstet ist.

## Beschreibung

Die Erfindung betrifft ein Klebeband, insb. für den fliegenden Rollenwechsel (flying splice) in Papierveredelungsmaschinen, Rotationsmaschinen u. dergl., sowie seine Verwendung, insb. beim Tiefdruck und Offsetdruck.

Der fliegende Rollenwechsel ist u.a. in Papierfabriken und bei der Papierverarbeitung ein gängiges Verfahren, um ohne die schnell laufenden Maschinen anhalten zu müssen eine alte, fast abgespulte Papierrolle durch eine neue zu ersetzen. Dabei werden doppelseitig klebende Selbstklebebänder, sog. Fixe, eingesetzt, die einerseits hochklebrig und - tackig sind, andererseits aber aufgrund ihrer ggf. wasserlöslichen Selbstklebemassen und Papierträger beim Wiedereinsatz der Abfälle in der Papiermaschine nicht stören. Diese Fixe werden - oft in kunstvoller Zackenform - am Bahnanfang der neuen Rolle verklebt, eine Prozedur, die erfahrene Fachleute verlangt, wobei für den gesamten Arbeitsvorgang aufgrund der schnell laufenden Maschinen nur Minuten bleiben, je nach Arbeitsbreite und Splice-Technik. - Solche Fixe sind u.a. als tesafix von der tesa AG im Handel.

Das herausragende Problem bei derartigen Rollenwechseln ist jedoch bis Heute ein unkontrolliertes Reißen beim Spleißvorgang. Die oftmals ruckartig angreifenden Kräfte werden entweder von den Klebebändern nicht ausgehalten, oder die Vorbereitung der neuen Rolle war nicht exakt genug, etwa leicht faltig, oder bei der Beschleunigung der neuen Bahn auf die Geschwindigkeit der alten gerät Luft unter die Vorderkante der neuen Bahn, was auch immer, ein Reißen verhindert einen korrekten Spleißvorgang, die Maschinen müssen angehalten, neu ausgerüstet und wieder angefahren werden.

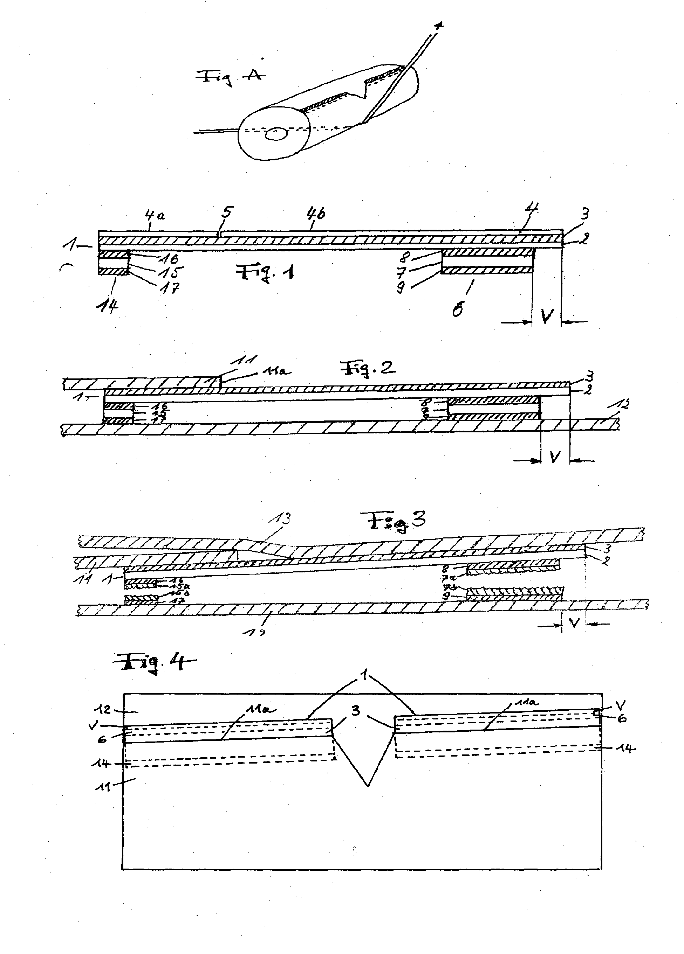

Ein weiteres Problem stellen klebende Bereiche dar, die nach dem erfolgten Spleißvorgang auf der alten und/oder neuen Papierbahn verbleiben und beim weiteren Durchlaufen der Maschinen stören können. Um diese Problem zu lösen, beschreibt **EP 818.408 B1** ein Klebeband für derartige Anwendungen, bei dem nach erfolgtem Splice keine klebenden Flächen mehr auftreten, indem ein spleißfreudiger Papierträger (dort 7) zum Einsatz kommt, der beim Splice spaltet und so die zur Verklebung mit der zweiten Lage der neuen Rolle eingesetzten Klebemassen (8 und 9) abdeckt und damit nicht-klebend hinterlässt. Solche Fixe sind als tesa-EasySplice von der tesa AG im Handel. - Ein ähnliches Klebeband beschreibt **DE 196 32 689 A1,** wobei hier ein spleißfreudiger Papierträger eingesetzt wird, der über die gesamte Breite des Klebebandes spaltet, vgl. insb. Fig.3.

Gleichwohl haben aber auch derartige Klebebänder Nachteile. So erweist sich ein Klebeband mit einem spleißfreudigen Papierträger, der über die gesamte Breite des Klebebandes spaltet (DE 196 32 689 A1), beim Spleißvorgang als nachteilig gegenüber einem Klebeband, bei dem nur ein schmaler Streifen mit einem spleißfreudigen Papierträger (EP 818.408 B1, dort 7) verwendet wird, wobei dieser schmale Streifen mit einer Seite des Klebebandes abschließt (vgl. EP 818.408 B1, Fig.1-3). Aber auch ein solches Klebeband mit nur einem schmalen solchen Streifen (EP 818.408 B1) zeigt in der Praxis Nachteile, indem bei seinem Einsatz zu viele Reißer beim Spleißvorgang auftreten und auch ein zu leichtes Abheben der für den Splice vorbereiteten obersten Lage der neuen Rolle beim Beschleunigen auftritt.

Um dieses zu leichte Abheben zu **vermeiden** schlägt **DE 198 30 674 A1** vor, auch den anderen Randbereich des Klebebandes mit einem schmalen solchen Streifen mit einem spleißfreudigen Papierträger auszurüsten. Um die Reißer zu vermeiden schlägt **DE 199 02 179 A1** vor, diesen schmalen Streifen in einem Abstand von 0,5 bis 15 mm von der einen Längskante des Klebebandes anzuordnen.

Aber auch diese Ausgestaltungen vermögen nicht in allen in der Praxis auftretenden Fällen zu überzeugen. So ergeben sich insb. beim Antrieb von Papierrollen mit einem oder mehreren Gurten, wie dies etwa beim Tiefdruck und Offsetdruck üblich ist und wie dies in Fig.A dargestellt ist, Probleme beim fliegenden Rollenwechsel, indem im Bereich des Gurtantriebs die oberste Lage der neuen Rolle nicht mit einem Splice-Klebeband ausgerüstet werden kann. In diesem Bereich verbleibt die oberste Lage ungesichert, und um ein zu starkes Eindringen von Luft beim Beschleunigen zu vermeiden, wird dieser Bereich allgemein V-förmig eingeschnitten, wie dies in Fig.A dargestellt ist. Die Bereiche rechts und links davon werden mit Klebebändern gesichert und sind so für den Splice vorbereitet, jedoch nur unzulänglich. Denn in der Praxis zeigt sich, dass mit den bisher vorgeschlagenen Klebebändern keine zufriedenstellenden Resultate erzielt werden, in dem V-förmig ausgeschnittenen Bereich (und nicht nur dort) kommt es immer wieder zu Reißern.

Aufgabe der Erfindung war es, hier Abhilfe zu schaffen, insb. die Nachteile des Standes der Technik zu vermeiden oder zumindest in für die Praxis ausreichender Weise abzumildern.

Demgemäss betrifft die Erfindung ein Klebeband (1) für den fliegenden Rollenwechsel insb. in Papierveredelungsmaschinen, mit einem Papierträger (2), der einseitig mit einer Selbstklebemasse (3) beschichtet ist, wobei ein Teil der nichtklebenden Rückseite des Papierträgers (2) mit einem beidseitig klebenden Klebeband (6) ausgerüstet ist, welches einen spleissfreudigen Papierträger (7) aufweist, der beidseits mit einer Selbstklebemasse (8, 9) ausgerüstet ist, und welches in einem Abstand (V) von 0,5-15 mm von einer der beiden Längskanten des Klebebandes (1) angeordnet ist, und wobei auch der andere Randbereich der Rückseite des Papierträgers (2) mit einem schmalen Streifen eines beidseitig klebenden Klebebandes (14) ausgerüstet ist, welches einen spleissfreudigen Papierträger (15) aufweist, der beidseits mit einer Selbstklebemasse (16, 17) ausgerüstet ist.

Damit werden beim fliegenden Rollenwechsel beachtliche Fortschritte realisiert, die sich insb. in der Praxis zeigen, insb. bei der Verwendung in mit Gurten angetriebenen Rollen, etwa im Tiefdruck und Offsetdruck. Dabei lässt sich das erfindungsgemäße Klebeband bis unmittelbar an den V-förmigen Einschnitt in dem Bahnanfang der neuen Bahn heran kleben, sodass nicht nur die Vorderkante der obersten Bahn gut gesichert ist, auch gegen ein allzu leichtes Abheben beim Beschleunigen, sondern auch der V-förmig eingeschnittene Bereich seitlich gesichert ist, indem dort das dem eingerückt angeordneten Klebeband gegenüberliegende Klebeband (14) bis nahe an den Einschnitt heranreicht, wie dies aus Fig.4 ersichtlich ist. Damit wird zugleich erreicht, dass dieser - an sich ungesicherte - Bereich gegen einen unerwünschten Lufteintritt beim Beschleunigen besser geschützt ist, und dass damit insgesamt wesentlich weniger Reißer beim Splice auftreten. Diese Vorteile zeigen sich auch bei anderen Splice-Ausführungen, bei denen ggf. durch unachtsame Vorbereitung die Vorderkante der obersten Bahn nur unzureichend ausgerüstet wurde, bei denen also Lufteintritt beim Beschleunigen möglich wird, ohne dass dies einen Reißer zur Folge hat. Auch bei weniger gut für Verklebungen geeigneten Oberflächen, etwa bei hochwertig ausgerüsteten Papieren, wie sie im Tiefdruck eingesetzt werden, ergibt sich erfindungsgemäß ein problemloserer Splice als bisher möglich.

Der Ausdruck "spleissfreudiger Papierträger" steht für einen Papierträger aus Spaltpapier, wie dies im Sprachgebrauch der einschlägigen Techniker und auch in der einschlägigen Literatur üblich geworden ist. Geeignete solche Papiere sind u.a. in DE 199 02 179 A1 beschrieben oder auch sog. zusammengegauchte Papiere (aus mehreren/verschiedenen Lagen).

Als Selbstklebemassen eignen sich besonders für repulpierbare Produkte insb. wasserlösliche solche Massen, wie sie an sich bekannt sind, wobei auch die in dem Klebeband eingesetzten Träger-Papiere auf diese Eigenschaften hin ausgewählt werden.

Vorteilhaft ist ein solches Klebeband dadurch gekennzeichnet, dass die Selbstklebemasse (3) eine Abdeckung (4) aufweist, die vorzugsweise mit einem Schlitz (5) versehen ist, der vorzugsweise im Abstand von 15-40 mm von der Längskante des Klebebandes (1) angeordnet ist, an welcher rückseitig eingerückt das Klebeband (6) angeordnet ist.

Weiterhin vorteilhaft ist ein solches Klebeband dadurch gekennzeichnet, dass es etwa 60-80 mm breit ist, das auf seiner Rückseite eingerückt angeordnete Klebeband (6) etwa 3-15 mm, vorzugsweise 3-10 mm breit ist, und das auf der Rückseite im anderen Randbereich angeordnete Klebeband (14) etwa 3-15 mm, vorzugsweise 9-10 mm breit ist.

Weiterhin vorteilhaft ist ein solches Klebeband dadurch gekennzeichnet, dass der Abstand (V), mit dem das Klebeband (6) von einer der beiden Längskanten des Klebebandes (1) angeordnet ist, 1-7 mm beträgt.

Weiterhin vorteilhaft ist ein solches Klebeband dadurch gekennzeichnet, dass das Klebeband (14) seitlich mit der dem eingerückten Klebeband (6) gegenüberliegenden Längskante des Klebebandes (1) abschließt.

Weiterhin vorteilhaft ist ein solches Klebeband dadurch gekennzeichnet, dass die auf der Rückseite des Papierträgers (2) angeordneten Klebebänder (6, 14) aus dem selben Material bestehen.

Die Erfindung betrifft auch die Verwendung eines solchen Klebebandes für einen fliegenden Rollenwechsel, bei dem die Rollen gurtgetriebenen sind, wobei insb. die oberste Bahn der neuen Rolle im vom Gurt erfassten Bereich V-förmig eingeschnitten ist und das Klebeband rechts und links dieses Bereichs eingesetzt wird.

Die Erfindung betrifft auch ein Verfahren eines fliegenden Rollenwechsels in einer Papierveredelungsmaschine o. dergl., wobei ein solches Klebeband der obersten Bahn einer neuen Rolle teilweise hinterklebt wird, während die auf der Rückseite des Klebebandes angeordneten beiden Klebebänder ihrerseits mit der darunter liegenden Bahn verkleben und damit die oberste Bahn sichern, ggf. unter Auslassung eines von einem die Rolle antreibenden Gurtes erfassten Bereichs, worauf die so ausgerüstete neue Rolle neben einer fast abgespulten, zu ersetzenden Rolle platziert wird, auf die gleiche Geschwindigkeit wie diese beschleunigt wird, und dann so verschwenkt wird, dass die offenliegende Selbstklebemasse des Klebebandes mit der Bahn der fast abgespulten Rolle bei im Wesentlichen gleichen Geschwindigkeiten verklebt, während zugleich die spleissfreudigen Papierträger derart spleissen, dass die auf ihnen beschichteten Selbstklebemassen von ihren Resten nichtklebend abgedeckt verbleiben.

Vorteilhaft wird dieses Verfahren so ausgeführt, dass von der geschlitzten Abdeckung zunächst nur der (kleinere) Teil abgezogen wird, der nicht dem rückseitig eingerückt angeordneten Klebeband gegenüber liegt, das Klebeband mit dem damit freigelegten Teil der Selbstklebemasse hinter die oberste Bahn einer neuen Rolle geklebt wird, während der andere (größere) Teil der Abdeckung erst kurz vor dem Einsatz zum fliegenden Rollenwechsel abgezogen wird.

In der Praxis ermöglicht dies, dass nur eine Person den Splice einer bis zu ca. 8 m breiten Papierrolle vorbereitet und vornimmt. Die "Fahne" der neuen Rolle kann z.B. zurückgeschlagen werden, d.h. die oberste Papierbahn wird nach oben umgelegt. Dann wird auf die darunter liegende Bahn quer und insb. diagonal ein erfindungsgemäßes Klebeband aufgeklebt mittels seiner beiden Streifen eines doppelseitigen Klebebandes, während die obere Selbstklebemasse vorteilhaft mit einem Abdeckpapier abgedeckt ist. Dann wird vorteilhaft zunächst nur der obere Bereich des (geschlitzten) Abdeckpapiers abgezogen und die "Fahne" über das Klebeband zurückgelegt und festgeklebt. Nun kann der überstehende Teil der "Fahne" so umgeknickt und abgetrennt werden, dass ein Teil des Klebebandes frei liegt. Dann - ggf. später - wird der Rest des Abdeckpapiers abgezogen und die Rolle ist fertig für den Splice.

Insgesamt wird es so der Papierindustrie ermöglicht, von dem bisherigen Verfahren der "Spritzenverklebung" abzugehen, ohne aber deren Vorteile aufzugeben. Aus technischen Gründen und auch aus Rationalisierungsgründen ist es erwünscht, beim automatischen Rollenwechsel an Beschichtungsanlagen von der bekannten "Spitzenverklebung" mit beidseitig klebendem Klebeband (Fix) abzugehen; nun kann vorteilhaft auf ein erfindungsgemäßes Klebeband umgestellt werden.

Zudem kann eine dem Verbraucher angebotene Rolle des Klebebandes wesentlich gleichmäßiger ausgeführt werden, insb. ohne Neigung zum Teleskopieren, Und es sind auch größere Rollen problemlos machbar und zu handhaben.

Erfindungsgemäß geht man vorteilhaft so vor, dass die oberste Papierlage einer neuen Rolle mit einem ca. 75 mm breiten einseitig klebenden abgedeckten Klebeband unterklebt wird (diagonal zur Laufrichtung). Die Unterklebung sollte ca. 15 mm betragen. Vor dem Unterkleben wird das 15 mm breite Abdeckpapier längs eines Schlitzes oder Perforation abgezogen. Für den eigentlichen Splice-Vorgang bleiben nach Abzug des restlichen Trennpapiers dann noch etwa 60 mm.

Im Folgenden soll die Erfindung anhand eines Ausführungsbeispiels näher beschrieben werden, ohne sie damit aber unnötig einschränken zu wollen.

Es zeigen:
Fig.A: eine schematische Ansicht einer neuen Rolle, herkömmlich für einen Splice vorbereitet und gurtgetrieben,
Fig.1: eine seitliche, schematische Ansicht eines erfindungsgemäßen Klebebandes,
Fig.2: eine seitliche, schematische Ansicht eines Klebebandes gemäß Fig.1, aufgeklebt auf eine Papierrolle und fertig für einen fliegenden Rollenwechsel,
Fig.3: eine Ansicht gemäß Fig.2, aber nach erfolgtem fliegenden Rollenwechsel,
Fig.4: eine schematische Draufsicht auf eine Anordnung gemäß Fig.2.

Auf Fig.A wurde bereits weiter vorn Bezug genommen. Sie zeigt eine zum fliegenden Rollenwechsel vorbereitete neue Papierrolle, ausgerüstet und vorbereitet in bekannter Weise. Im Einzelnen zeigen Fig.1-4 ein Klebeband 1 mit einem Papierträger 2, einseitig beschichtet mit einer Selbstklebemasse 3. Die Gesamtdicke des Trägers 2 mit Selbstklebemasse 3 beträgt ca. 0,08 mm, die Breite ca. 75 mm. Abgedeckt ist die Selbstklebemasse 3 mit einem silikonisierten Trennpapier 4, das in ca. 15 mm Abstand vom linken Rand mit einem Schlitz 5 versehen ist, so dass zunächst der linke Teil 4a des Trennpapiers 4 abgenommen werden kann, dann der rechte Teil 4b. Am rechten Ende des Klebebandes 1 ist ein beidseitig klebendes Klebeband 6 unterklebt, bestehend aus einem spleissfreudigen Papierträger 7, beidseits beschichtet mit einer Selbstklebemasse 8 bzw. 9. Das Klebeband 6 hat eine Breite von ca. 9 mm und ist um V ca. 3 mm eingerückt. Am linken Ende des Klebebandes 1 ist ein weiteres beidseitig klebendes Klebeband 14 unterklebt, aus demselben Material wie Klebeband 6, mit spleissfreudigen Papierträger 15, beidseits beschichtet mit einer Selbstklebemasse 16 bzw. 17, Breite ca. 5 mm. - Auch die Selbstklebemassen 9 und 17 können mit Trennpapier abgedeckt sein (nicht dargestellt und nicht nötig wenn zur Rolle gewickelt).

In Fig.2 ist dargestellt, wie ein solches Klebeband 1 hinter eine Papierbahn 11 geklebt ist, und zwar mit dem linken Teil, nachdem von diesem das Trennpapier 4a abgezogen wurde. Die freiliegende Selbstklebemassen 9 und 17 sind auf die unter der Papierbahn 11 liegende Papierbahn 12 einer Papierrolle geklebt. Auch der rechte Teil des Trennpapiers 4b wurde abgezogen, so dass die so ausgerüstete Papierrolle fertig für einen fliegenden Rollenwechsel ist, wobei die Verklebung des Klebebandes 1 schräg über die Rolle verläuft, um einen Ruck im Moment des fliegenden Rollenwechsels zu vermeiden. - Die Selbstklebemasse 3 liegt nun offen und bereit für diesen fliegenden Wechsel, in einer Breite von ca. 60 mm und über die gesamte Breite der Papierrolle.

Die so ausgerüstete (neue) Papierrolle wird neben die abgewickelte (alte) Papierrolle gebracht, an die die neue angesetzt werden soll, und auf die gleiche Drehgeschwindigkeit beschleunigt wie diese. Ist dies erreicht, kann der Wechsel vollzogen werden: die neue Rolle wird an die alte herangeführt, die Selbstklebemasse 3 verklebt gemäß Fig.3 mit der Papierbahn 13 der alten Rolle, während die spleissfreudigen Papierträger 7 und 15 derart spleissen, dass Teile 7a bzw. 15a auf dem Klebeband 1 verbleiben und dort die Selbstklebemasse 8 bzw. 16 abdecken, während die anderen Teile 7b bzw. 15b auf der Selbstklebemasse 9 bzw. 17 verbleiben, welche auf der Papierbahn 12 kleben. Damit sind beide Selbstklebemassen 8 und 9 bzw. 16 und 17 gewissermaßen neutralisiert, kleben nicht mehr und stören damit auch nicht im weiteren Prozess in den Papier- und Beschichtungsanlagen.

In Fig.4 ist dargestellt, wie die Verhältnisse bei einer gurtgetriebenen Rolle sind, auf die Fig.1-3 wird Bezug genommen. Deutlich wird dabei, wie nah die Klebebänder 14 im Bereich des V-förmigen Einschnitts der Kante der Papierbahn 11 kommen und diese stabilisieren.

Die Herstellung eines erfindungsgemäßen Klebebandes findet insb. so statt, dass auf die nicht klebende Rückseite eines Klebebandes (aus 2 und 3) zwei Streifen eines Fixes mit spleissfreudigem Träger aufkaschiert werden. Darauf wird das Laminat geschnitten. Es können auch die Breiten der zwei Streifen Fixe gleich sein, d.h. für beide Streifen Fix kann das selbe Material verwendet werden.

## Patentansprüche

1. Klebeband (1) für den fliegenden Rollenwechsel insb. in Papierveredelungsmaschinen, mit einem Papierträger (2), der einseitig mit einer Selbstklebemasse (3) beschichtet ist, wobei ein Teil der nichtklebenden Rückseite des Papierträgers (2) mit einem beidseitig klebenden Klebeband (6) ausgerüstet ist, welches einen spleissfreudigen Papierträger (7) aufweist, der beidseits mit einer Selbstklebemasse (8, 9) ausgerüstet ist, und welches in einem Abstand (V) von 0,5-15 mm von einer der beiden Längskanten des Klebebandes (1) angeordnet ist, und wobei auch der andere Randbereich der Rückseite des Papierträgers (2) mit einem schmalen Streifen eines beidseitig klebenden Klebebandes (14) ausgerüstet ist, welches einen spleissfreudigen Papierträger (15) aufweist, der beidseits mit einer Selbstklebemasse (16, 17) ausgerüstet ist.

2. Klebeband nach Anspruch 1, **dadurch gekennzeichnet, dass** die Selbstklebemasse (3) eine Abdeckung (4) aufweist, die vorzugsweise mit einem Schlitz (5) versehen ist, der vorzugsweise im Abstand von 15-40 mm von der Längskante des Klebebandes (1) angeordnet ist, an welcher rückseitig eingerückt das Klebeband (6) angeordnet ist.

3. Klebeband nach einem der Ansprüche 1-2, **dadurch gekennzeichnet, dass** das Klebeband (1) 60-80 mm breit ist, das auf seiner Rückseite eingerückt angeordnete Klebeband (6) 3-15 mm, vorzugsweise 3-10 mm breit ist, und das auf der Rückseite im anderen Randbereich angeordnete Klebeband (14) 3-15 mm, vorzugsweise 9-10 mm breit ist.

4. Klebeband nach einem der Ansprüche 1-3, **dadurch gekennzeichnet, dass** der Abstand (V), mit dem das Klebeband (6) von einer der beiden Längskanten des Klebebandes (1) angeordnet ist, 1-7 mm beträgt.

5. Klebeband nach einem der Ansprüche 1-4, **dadurch gekennzeichnet, dass** das Klebeband (14) seitlich mit der dem eingerückten Klebeband (6) gegenüberliegenden Längskante des Klebebandes (1) abschließt.

6. Klebeband nach einem der Ansprüche 1-5, **dadurch gekennzeichnet, dass** die auf der Rückseite des Papierträgers (2) angeordneten Klebebänder (6, 14) aus dem selben Material bestehen.

7. Verwendung eines Klebebandes nach einem der Ansprüche 1-6 für einen fliegenden Rollenwechsel, bei dem die Rollen gurtgetriebenen sind, wobei insb. die oberste Bahn der neuen Rolle im vom Gurt erfassten Bereich V-förmig eingeschnitten ist und das Klebeband rechts und links dieses Bereichs eingesetzt wird.

8. Verfahren eines fliegenden Rollenwechsels in einer Papierveredelungsmaschine o. dergl., wobei ein Klebeband nach einem der Ansprüche 1-6 der obersten Bahn einer neuen Rolle teilweise hinterklebt wird, während die auf der Rückseite des Klebebandes angeordneten beiden Klebebänder ihrerseits mit der darunter liegenden Bahn verkleben und damit die oberste Bahn sichern, ggf. unter Auslassung eines von einem die Rolle antreibenden Gurtes erfassten Bereichs, worauf die so ausgerüstete neue Rolle neben einer fast abgespulten, zu ersetzenden Rolle platziert wird, auf die gleiche Geschwindigkeit wie diese beschleunigt wird, und dann so verschwenkt wird, dass die offenliegende Selbstklebemasse des Klebebandes mit der Bahn der fast abgespulten Rolle bei im Wesentlichen gleichen Geschwindigkeiten verklebt, während zugleich die spleissfreudigen Papierträger derart spleissen, dass die auf ihnen beschichteten Selbstklebemassen von ihren Resten nichtklebend abgedeckt verbleiben.

9. Verfahren nach Anspruch 8, **dadurch gekennzeichnet, dass** von der geschlitzten Abdeckung zunächst nur der (kleinere) Teil abgezogen wird, der nicht dem rückseitig eingerückt angeordneten Klebeband gegenüber liegt, das Klebeband mit dem damit freigelegten Teil der Selbstklebemasse hinter die oberste Bahn einer neuen Rolle geklebt wird, während der andere (größere) Teil der Abdeckung erst kurz vor dem Einsatz zum fliegenden Rollenwechsel abgezogen wird.
